(19) Europäisches Patentamt
European Patent Office
Office européen des brevets

(11) **EP 0 622 815 B1**

(12) **EUROPÄISCHE PATENTSCHRIFT**

(45) Veröffentlichungstag und Bekanntmachung des Hinweises auf die Patenterteilung:
**18.09.1996   Patentblatt 1996/38**

(51) Int Cl.[6]: **H01G 9/04**, H01G 9/00

(21) Anmeldenummer: **94106286.1**

(22) Anmeldetag: **22.04.1994**

(54) **Langzeitstabile Elektrode und daraus gebildeter Doppelschichtkondensator**

Long time stable electrode and double layer capacitor with this electrode

Electrode stable à longue durée et condensateur à double couche avec une telle électrode

(84) Benannte Vertragsstaaten:
**DE FR GB**

(30) Priorität: **24.04.1993   DE 4313474**

(43) Veröffentlichungstag der Anmeldung:
**02.11.1994   Patentblatt 1994/44**

(73) Patentinhaber: **DORNIER GmbH**
**D-88039 Friedrichshafen (DE)**

(72) Erfinder:
• **Kurzweil, Peter, Dr.**
**D-88090 Immenstaad (DE)**
• **Schmid, Barbara, Dipl.-Ing.**
**D-88090 Immenstaad (DE)**
• **Schmid, Ottmar, Dipl.-Ing.**
**D-88677 Markdorf (DE)**

(74) Vertreter: **Landsmann, Ralf, Dipl.-Ing.**
**Dornier GmbH**
**FNS 003**
**88039 Friedrichshafen (DE)**

(56) Entgegenhaltungen:
**US-A- 4 758 929**          **US-A- 5 079 674**

## Beschreibung

Die Erfindung betrifft eine langzeitstabile Elektrode und einen daraus gebildeten Doppelschichtkondensator.

Ein Doppelschichtkondensator besteht aus ausgewählten Elektronen- und Ionenleitern. Ursächlich für die Fähigkeit, Energie zu speichern, ist die Kapazität der Grenzfläche zwischen den Elektronen- und Ionenleitern.

Prinzipiell tauchen zwei gut leitfähige, mit einer elektroaktiven Schicht von hoher Kapazität beschichtete Elektroden in einen gut leitfähigen Elektrolyten. Legt man zwischen den Elektroden eine äußere Spannung U an, so lädt sich der elektrochemische Kondensator um die eingespeiste Energie W auf, die ein Halb des Produktes von Kapazität und der Differenz der Quadrate von Lade- und Entladespannungen $U_1$, $U_2$ ist:

$$W = 1/2\ C\ (U_1)^2 - (U_2)^2 = 1/2\text{-}\ (CU_1)^2\ (1\text{-}\alpha) = 1/2\text{-}\ (QU_1)^2\ (1\text{-}\alpha^2)$$

$\alpha$ ist der Bruchteil der angelegten Spannung, die im Kondensator verbleibt.

Ist der Innenwiderstand des Kondensators $R_i$ gegen den äußeren Widerstand des Verbrauchers $R_V$ nicht vernachlässigbar, so mindert dies die nutzbare Energie weiter um das Verhältnis $R_V\ /\ (R_V + R_i)$.

Die Pseudokapazität C der Grenzfläche Elektroden/Elektrolyt setzt sich aus dem Anteil der Doppelschichtkapazität und den kapazitiven Wirkungen elektrochemischer Redoxvorgänge und Adsorptionsprozesse zusammen.

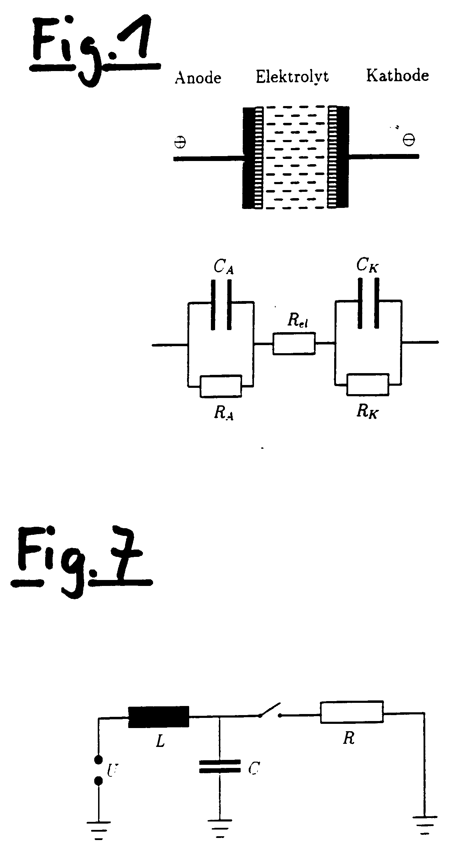

**Fig. 1** zeigt den prinzipiellen Aufbau und das elektrotechnische Ersatzschaltbild des Doppelschichtkondensators. Jede Elektrode ist eine Parallelschaltung von Polarisationswiderstand ($R_A$ bzw. $R_K$) und Kapazität ($C_A$ bzw. $C_U$) zugeordnet. Zwischen den Elektroden befindet sich ein Ionenleiter mit dem Elektrolytwiderstand $R_{el}$. Anode, Kathode und Elektrolyt zusammen verursachen die meßbare Kapazität des Doppelschichtkondensators.

Der elektrochemische Kondensator besteht aus mindestens zwei in Serie geschalteten Elektroden, somit mindestens zwei kapazitiven Grenzflächen Elektrode/Elektrolyt. Die Zellkapazität ist halb so groß wie die Kapazität der Einzelelektrode. Die gespeicherte Energie hingegen, da von der Zellspannung bestimmt, ist das Doppelte der einzelnen Grenzflächen.

## Stand der Technik

Bisher werden Akkumulatoren zur Speicherung elektrischer Energie eingesetzt; sie lassen sich nicht beliebig oft und zudem nur sehr langsam laden und entladen. Der Doppelschichtkondensator hingegen ist um Größenordnungen öfter zyklisierbar. Im Gegensatz zum käuflichen Elektrolytkondensator weist der Doppelschichtkondensator weitaus höhere spezifische Kapazität auf und vermag somit größere Energiemengen je Raum- und Masseneinheit zu speichern. Anders als im Festoxid-Dielektrikum des Elektrolytkondensators wird beim Doppelschichtkondensator elektrische Energie in der elektrochemischen Doppelschicht an der Grenzfläche Festelektrode/Flüssigelektrolyt gespeichert. Vorteile des Doppelschichtkondensators sind weiterhin: hohe Energie- und Leistungsdichte, hoher Volumenwirkungsgrad, wartungsfreier Betrieb, Ungefährlichkeit im unbetriebenem Zustand.

Materialien auf Basis leitfähiger Polymere arbeiten nur bei niedrigen Strömen und zeigen Probleme der Langzeitstabilität. Kohlesysteme zeigen hohe Widerstände und schlechte Wirkungsgrade. Japanische Entwickler (NEC, ASAHI, MATSUSHITA) verfolgen daher Milli- und Mikroampere-Anwendungen, u. a. als Batterieersatz für Computerspeicher und Konsumelektronik. Andere verwenden Protonenaustauschermembranen, die mit einer Mischung von Rutheniumoxid und Kohle beschichtet sind (GINER INC., U.S.A.). Diese Doppelschichtkondensatoren sind nicht geeignet für Hochleistungs-Pufferspeicher.

Doppelschichtkondensatoren für höhere Ströme, die in den U.S.A. für SDI-Anwendungen entwickelt werden, basieren ebenfalls auf der Kohletechnologie (MAXWELL).

Eine in der US-Patentschrift **5,079,674** beschriebene Elektrode besteht im wesentlichen aus Kohle und Kunststoff. Kohlepartikel werden mit Metallsalzen vermischt, durch Zusatz einer Lauge Metallhydroxide gebildet, die an die Kohlepartikel adsorbieren, sodann die Partikel mit Hilfe eines Fluorpolymeren wie PTFE aneinander gebunden und bei 80-125°C getrocknet.

- Diese Metall<u>hydroxide</u> können nicht in saurer Lösung eingesetzt werden und sind chemisch wenig stabil, somit für den Einsatz in pulsbetriebenen Doppelschichtkondensatoren nicht praktikabel. Erst durch thermische Nachbehandlung oberhalb 300°C entstehen stabile Metall<u>oxide</u>, die in saurer und alkalischer Lösung eingesetzt werden können.

- Der Verbund von Kohle, Polymer und Metallsalzen führt zu Elektroden mit relativ hohem Widerstand. Eine Pulsspeicheranwendung unter hohen Strömen ist mit diesen hochohmigen Elektroden nicht möglich.

Der Erfindung liegt die Aufgabe zugrunde, eine Elektrode und daraus gebildeten Doppelschichtkondensator mit verbesserter Leitfähigkeit, Kapazität, Energie- und Leistungsdichte zu schaffen.

Diese Aufgabe wird durch den Gegenstand des Patentanspruchs 1 gelöst. Vorteilhafte Ausbildungen der Erfindung sind Gegenstand weiterer Ansprüche.

Erfindungsgemäß ist der Doppelschichtkondensator aus Elektrode und Elektrolyt folgendermaßen aufgebaut: die Elektrode besteht aus einer Aktivschicht aus Metalloxidpulver auf einem chemisch beständigen Metallträger und der Elektrolyt ist eine verdünnte wässrige Mineralsäure oder Alkalilauge. In einer bevorzugten Ausführungsform enthalten die Elektroden außerdem gebundenes Chlor.

Die Aktivschicht der erfindungsgemäßen Elektrode besteht aus chloridhaltigen, unterstöchiometrischen Metalloxiden der Form $MO_{2-x}Cl_x \bullet yH_2O$. M sind bevorzugt die Elemente Ruthenium, Iridium, Tantal, Titan und Platin. Die Umwandlungstemperatur der Vorstufen von 300-500°C ist entscheidend für die Zusammensetzung und Redoxkapazität dieser Aktivschicht. Die Temperatur soll im Phasenübergang der chloridischen Vorstufe zum hydratisierten Oxid liegen und läßt sich aus thermogravimetrischen Kurven bestimmen.

Mit der erfindungsgemäßen Lehre, chloridhaltige, unterstöchiometrische Metalloxidpulver separat herzustellen und in einem zweiten Schritt auf den Träger aufzubringen, entstehen Aktivschichten von hoher Kapazität, wie sie mit den bisher bekannten Verfahren nicht erreicht werden können. Die Morphologie der Pulver wird durch Zugabe löslicher Salze während des Herstellprozesses eingestellt.

Die Langzeitstabilität der Elektrode über mehrere tausend Stunden wird erst dadurch erreicht, daß eine Grundschicht zwischen Aktivschicht und Träger gebracht wird.

Bisherige Doppelschichtkondensatoren benötigen einen Separator zwischen den Elektroden. Der Erfindungsgegenstand beschreibt den matrixfreien Aufbau eines Doppelschichtkondensators.

Der erfindungsgemäße Doppelschichtkondensator erlaubt die Speicherung elektrischer Energie auf äußerst kleinem Raum und die elektrische Entladung mit sehr hohen Leistungen; er weist insbesondere bezüglich des Widerstandes und der Strombelastung erheblich bessere Leistungsdaten auf als die bislang bekannte Kohle- und Polymertechnologie.

Die Erfindung stellt ein System mit hoher Pulskapazität dar. Es handelt sich um einen Pulsenergiespeicher, der periodisch geladen und entladen wird und hohe Pulsströme zu liefern vermag. Im Gegensatz zum herkömmlichen Elektrolytkondensator ist die Erfindung in der Lage, im Wechselstrombetrieb zu arbeiten.

Entsprechend der in der Einleitung angegebenen Gleichung umgreift die erfinderische Lösung folgende Teilprobleme:

1. Hohe Kapazität der Elektroden, um möglichst viel elektrische Energie zu speichern.
2. Niedriger Widerstand der Elektroden, um elektrische Verluste gering zu halten.
3. Hohe Kapazität und niedriger Widerstand der Grenzfläche Matrix-Elektrolyt
4. Kombination geeigneter Elektroden, Elektrolyte, Matrizen, Dichtungen, Endplatten, Stromableitungen zu funktionstüchtigen Einzelzellen.
5. Kombination der Einzelzellen zu einem Doppelschichtkondensator mit niedrigem Widerstand und hoher Kapazität.

Um hohe Elektrodenkapazität zu erzielen, muß die aktive Oberfläche der Elektroden vergrößert werden. Dies wird durch Aufbringen hochoberflächiger Beschichtungen auf chemisch stabile Trägermaterialien erreicht.

Um hohe Pulsströme zu liefern, muß die elektroaktive Beschichtung eine ausreichende Redoxkapazität aufweisen. Dies wird durch Verwendung nicht vollständig oxidierter Metalloxide erreicht.

Im Langzeitbetrieb unter hohen Strömen zeigen herkömmliche Elektroden eine Degradation, die von der Ausbildung einer minderleitenden Zwischenschicht zwischen dem Metallträger und der Metalloxidbeschichtung herrührt. Die erfindungsgemäßen Elektroden sehen daher einen speziellen Vorbehandlungsschritt vor, bei dem feinverteiltes Edelmetall auf den geätzten Träger aufgebracht wird. Diese Edelmetallpartikel schaffen eine leitende Verbindung zum Metalluntergrund und schließen` die mögliche minderleitende Zwischenschicht elektrisch kurz.

Zwischen den Elektroden kann sich ein nichtleitender, poröser Abstandshalter ("Matrix") befinden. Die räumliche Trennung der Elektroden kann aber auch durch Aussparungen oder Führungen eines umgebenden Gehäuses erreicht werden. Der Vorteil der Matrix besteht darin, daß sie den Elektrolyten aufsaugt und selbst bei Beschädigung des Bauteils keine Flüssigkeit nach außen treten läßt.

Die Funktionsfähigkeit des Doppelschichtkondensators wird durch Verpressen von Elektroden und elektrolytgetränkten Matrizen erreicht. Die Zersetzungsspannung des Elektrolyten und die vorgegebene Betriebsspannung des Bauteiles bestimmen die Anzahl der hintereinandergeschalteten Elektroden-Matrix-Einheiten (Einzelzellen).

**a) Elektrodenmaterial**

Leichtmetallgestützte Metalloxidelektroden zeigen die für die Anwendung besten Eigenschaften hinsichtlich Widerstand und Kapazität. Dabei liegen der Erfindung zwei Konzepte zugrunde:

- Saure Technologie: mit Metalloxiden beschichtete Leichtmetalle wie Titan in schwefelsaurer Lösung.

- Alkalische Technologie: mit Metalloxiden beschichtete metallische Träger wie Nickel in alkalischer Lösung.

Elektroaktive Beschichtungen mit chloridhaltigen, unterstöchiometrischen Ruthenium-, Iridium-, Tantal-, Palladium-, Titanoxiden und deren Mischungen zeigen die besten Ergebnisse hinsichtlich Widerstand und Kapazität.

Bedingung für hohe spezifische Kapazität ist eine große Elektrodenfläche. Sie wird durch das Herstellverfahren der Elektroden erreicht. Je nach spezifischer Anwendung des Doppelschichtkondensators durchlaufen die Elektroden verschiedene Vorbehandlungsschritte, die letztendlich zur Herstellung der erfindungsgemäßen metalloxidbeschichteten Metallträgerelektroden führen.

- Pulvertechnik (Sintertechnik) für Elektroden mit hoher Kapazität (mehrere Farad pro Quadratzentimeter) und geringem Widerstand. Separat hergestellte Metalloxidpulver werden in organischer Suspension auf den Träger aufgebracht und getrocknet.

- Netztechnik für Elektroden mit dreidimensionaler Struktur von sehr hoher Kapazität (mehrere Farad pro Quadratzentimeter) und keinem Widerstand. Auf einen ebenen Metallträger wird ein engmaschiges, durchlässiges Metallnetz aufgebracht, das mit hochoberflächigen Metalloxiden beschichtet wird.

- Filmtechnik für Elektroden mit sehr hoher Kapazität (mehrere Farad) und kleinem Widerstand. Separat hergestellte Pulver werden mittels einer Leitkleber-Suspension mit dem Träger verbunden.

- Kombinationen von Netztechnik, Pulvertechnik und Filmtechnik.

Der metallische Träger wird gereinigt, abgeschliffen, sodann geätzt. Im zweiten Schritt wird der geätzte Träger galvanisch und/oder chemisch reduktiv mit metallischen Edelmetallpartikeln (Palladium, Platin etc.) überzogen. Die Metallkeime verbessern den Widerstand der Elektrode im Langzeitbetrieb entscheidend.

Im letzten Schritt werden die Elektroden unter Luftzutritt erhitzt; dabei sintern die Beschichtungen haftend auf den Träger.

Entscheidend ist eine Temperatur im Bereich unter 500°C. Ergebnis der Herstellung ist nicht eine Oxidelektrode, wie sie durch Sintern bei höherer Temperatur hergestellt werden kann. Die Elektrode ist frei von Kohlenstoff und enthält gebundenes Chlor.

Die so hergestellten Elektroden bestehen aus vier Schichten: l) metallischer Träger, 2) metallische Zwischenschicht, 3) Metalloxidbeschichtung. Durch den Trocknungsvorgang kommt es zusätzlich zur Aufbildung einer Mischoxidschicht zwischen 2) und 3).

**Beispiel 1** (Pulververfahren, Schmelzprozeß). Rutheniumchlorid (oder Mischungen von Rutheniumchlorid mit Palladium-schwarz, Platinschwarz, Platinoxid, Natriumhexahydroxoplatinat, Iridiumoxid und/oder Tantalchlorid) und Natriumnitrat werden im Schmelztiegel vermischt und mit wenig verdünnter Salzsäure aufgeschlämmt. Die Mischung wird unter Luftzutritt umgesetzt. Das so hergestellte Pulver wird mehrfach mit Wasser gewaschen, sodann getrocknet und zerkleinert.

**Beispiel 2** (Pulververfahren, Fällprozeß). In eine wäßrige Rutheniumchloridlösung (oder eine Mischung von Rutheniumchlorid und Hexachloroiridiumsäure und/oder Tantal(V)-chlorid) wird konzentrierte Alkalihydroxidlösung bis zur vollständigen Ausfällung von Oxidhydrat zugegeben. Anschließend wird abfiltriert und der Filterkuchen mehrfach gewaschen und getrocknet.

Das Pulver kann (a) direkt verwendet oder (b) bei unter 500°C thermisch nachbehandelt werden. Dabei können Ruthenium- und Tantaloxidhydrat (a) separat gefällt und vor oder nach anschließender Trocknung vermischt werden oder (b) in einem Arbeitsgang gefällt und getrocknet werden. Das entstandene Pulver wird wie in Beispiel 4 beschrieben auf den Metallträger aufgebracht.

**Beispiel 3** (Modifiziertes Pulververfahren). In getrennten Arbeitsschritten werden aus Metalloxidpulver nach Beispiel 1 und/oder 2 hergestellt, in veränderlichen Gewichtsanteilen vermischt und gemeinsam zu einem Mischoxidpulver umgesetzt. Dem Pulver kann auch metallisches oder oxidisches Platin oder Palladium zugesetzt werden, um die Stabilität der Elektroden zu verbessern.

**Beispiel 4** (Beschichtungstechnik). In einer Suspension mit hochsiedenden Polyalkoholen oder Nitrocellulose und einigen Mikrolitern Salzsäure wird das Pulver auf einen vorbehandelten Metallträger aufgestrichen. Anschließend wird die Elektrode im Brennofen getrocknet und gesintert. Dicke Schichten entstehen durch mehrfaches Aufstreichen, Aufspritzen oder Aufdrucken der Beschichtungssuspension.

Die nach diesem Verfahren hergestellten Elektroden für saure und alkalische Systeme zeigen Kapazitäten bis 3 $F/cm^2$ bzw. 100 F/g Aktivmasse.

**Beispiel 5** (Vorbehandlung des Trägers). Titan wird vorher entfettet, abgeschliffen (bis sichtbar keine Oxidreste mehr verbleiben), sodann in kochender Oxalsäurelösung geätzt. Danach wird die matt-hellgrau erscheinende Elektrode in verdünnter Salzsäure aufbewahrt.

Nickel wird in verdünnter Schwefelsäure angeätzt.

**Beispiel 6** (Edelmetallgrundschicht). Zur Herstellung langzeitstabiler Elektroden wird eine dünne Grundschicht von metallischem Palladium oder Platin galvanisch und/oder chemisch aufgebracht. Für Elektroden mit gutem Langzeitverhalten wird zunächst eine chemische, sodann eine galvanische Grundschicht aufgebracht.

- Chemische Palladiumbeschichtung: Der Metallträger wird mehrfach mit wäßriger Palladiumchloridlösung benetzt und getrocknet, sodann mit einer Lösung von Reduktionsmittel in Kontakt gebracht.

- Galvanische Palladiumbeschichtung des kathodisch geschalteten Metallträgers aus einer Lösung von Palladiumchlorid.

**Beispiel 7** (Netztechnik). Kapazitäten bis 4 Farad/cm$^2$ Elektrodenfläche wurden nach folgendem Rezept erzielt: Träger ist ein engmaschiges Nickelnetz, das auf ein Nickelblech aufgeschweißt wird, oder ein poröser Nickelfilz. Diese dreidimensionale Elektrodenstruktur garantiert hohe flächenbezogene Oberfläche und Kapazität.
Die Aktivschicht bilden Pulver nach Beispiel 1-3.

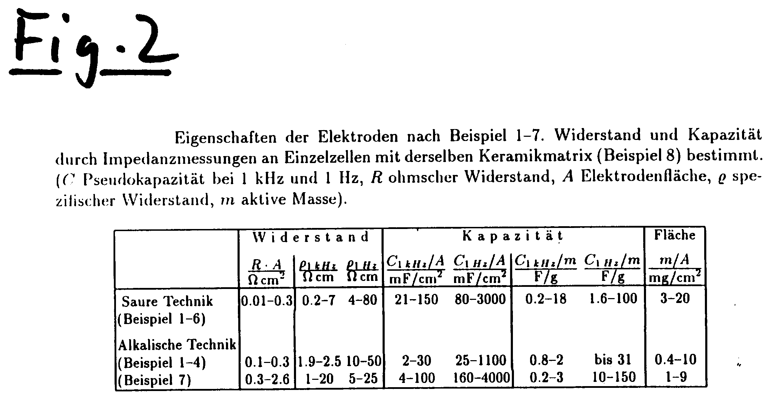

**Fig. 2** zeigt in tabellarischer Form die Eigenschaften der Elektroden nach Beispiel 1 bis 7. Widerstand und Kapazität wurden durch Impedanzmessungen an Einzelzellen mit derselben Keramikmatrix bestimmt.

### b) Elektrolyt und Matrix

Durch Kombination zweier nach Beispiel 1-7 hergestellter Elektroden mit einer elektrolytgetränkten Matrix entstehen Einzelzellen. Die Matrix dient gleichzeitig als Separator. Von entscheidender Bedeutung für die Langzeitstabilität dieser Zellen ist das verwendete Matrixmaterial; es werden spezielle, poröse Faserkeramikgewebe eingesetzt, z. B. in chemisch stabile Thermoplaste aufgenommenes Zirkondioxid. Dabei darf die Porengröße nicht zu groß sein, um Kurzschlüsse zwischen sich berührenden Metalloxidpartikeln gegenüberliegender Elektroden zu vermeiden.
Als Elektrolyte werden anorganische Säuren und Laugen mit Konzentrationen im Bereich des Maximums der Leitfähigkeit-Konzentration-Kurve eingesetzt. Der Elektrolyt kann durch geeignete inerte, anorganische Zusätze eingedickt werden.

### c) Zelldesign

Die Baueinheit des Doppelschichtkondensators entsteht (i) durch elektrische Reihenverschaltung von Einzelzellen, (ii) durch Hintereinanderschaltung bipolarer Elektroden-Matrix-Einheiten.

- Das Seriendesign von hintereinander geschalteten Einzelzellen in einem Kunststoff- oder Metallgehäuse. Die Einzelzellen werden separat hergestellt und anschließend elektrisch miteinander verbunden.

- Das Stackdesign (Stapeldesign) :
Hintereinanderschaltung von zweiseitig beschichteter Elektrode (= bipolare Elektrode), Matrix, bipolarer Elektrode, Matrix u.s.w. zu einem bipolaren Elektrodenstapel.

- Das Wickeldesign für großflächige Elektroden, von denen mehrere in Serie geschaltet in einem Gehäuse vereinigt werden können. Die Elektroden-Matrix-Einheiten werden zur platzsparenden Anordnung zusätzlich gerollt.

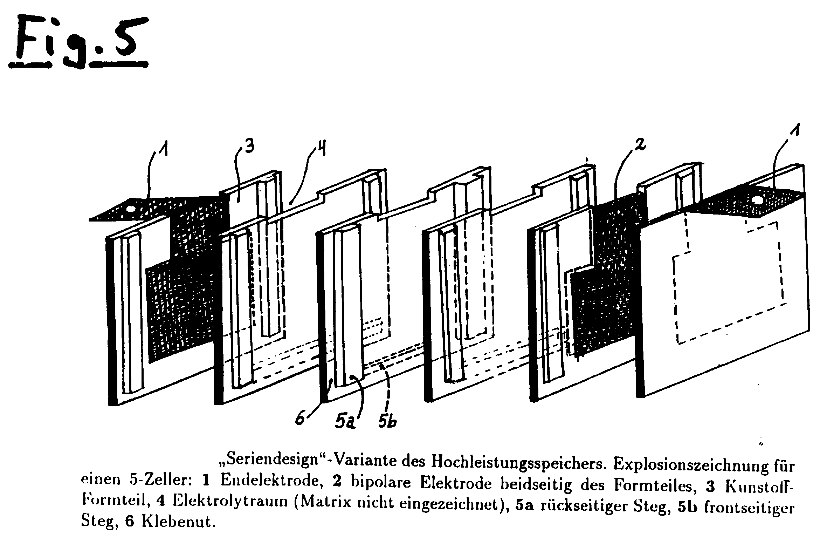

**Beispiel 8** (Seriendesign). Eine Ausführung ist in **Fig. 5** dargestellt. Ein aus chemisch stabilen Kunststoffen gefertigtes Gehäuseteil 3 nimmt je zwei Elektroden 1,2 und eine elektrolytgetränkte Matrix auf. Durch Anordnung mehrerer solcher Einheiten hintereinander entsteht ein Doppelschichtkondensator mit mehreren Zellen. Von den äußeren Abschlußelektroden 1 werden elektrische Zuleitungen aus dem Gehäuse herausgeführt. Je zwei aufeinanderfolgende innere bipolare Elektroden 2 werden elektrisch miteinander verbunden. Die Räume zwischen den Elektroden 4 werden mit Elektrolyt aufgefüllt. Die Gehäuseteile 3 werden durch Verkleben der Stege 5a,5b (5a rückseitiger Steg, 5b frontseitiger Steg) längs der Nuten 6 aneinandergefügt. Die Stege 5a,5b definieren den Abstand zweier Elektroden und die Dicke einer Einzelzelle. Die einzelnen Kunststoffteile 3 bilden eine Hälfte des Gehäuses einer Einzelzelle. Der Elektrolyt wird durch eine ausgesparte Öffnung 4, die sich nach dem Aneinanderfügen zweier Einzelzellhälften ergibt, eingefüllt, die Öffnung mit einem Kunststoffstopfen oder einem Deckel verschlossen. Der Vorteil dieser Variante ist die Nachfüllbarkeit mit Elektrolyt.

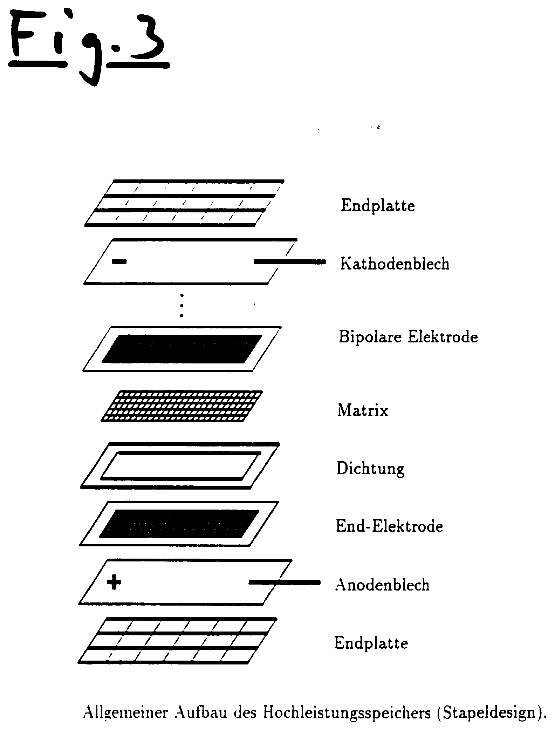

**Beispiel 9** (Stapeldesign). Eine Ausführung ist in der **Fig. 3** dargestellt. Eine durch die Betriebsspannung des endgültigen Bauteiles vorgegebene Zahl von Elektroden werden beidseitig beschichtet (bipolare Elektroden). Zwischen je zwei bipolaren Elektroden befindet sich eine elektrolytgetränkte Matrix. Zwei weitere, einseitig beschichtete Elektroden werden mit stabilen Endplatten durch Andruck verbunden (Endelektroden). Die einzelnen Elektrolyträume zwischen den Elektroden werden durch Dichtungen (z.B. Polymermaterialien) abgedichtet. Die Stromzufuhr übernimmt die Endplatte, wie in der Fig. abgebildet. Möglich hierfür ist aber auch ein metallischer Stempel, der in die Endplatte eingelassen wird oder ein auf der Elektrode angebrachter elektrischer Kontakt in Form eines Kabels oder eines Metallbandes.

Die Zahl der Elektroden N richtet sich nach folgender Formel:

Betriebsspannung = [2 Endelektroden + (N-2) bipolare Elektroden] *

Einzelzellspannung

Die Dicke des Stacks ergibt sich aus der Zellenzahl. Die Zellfläche ist beliebig und bestimmt die Energiespeicherfähigkeit des Systems.

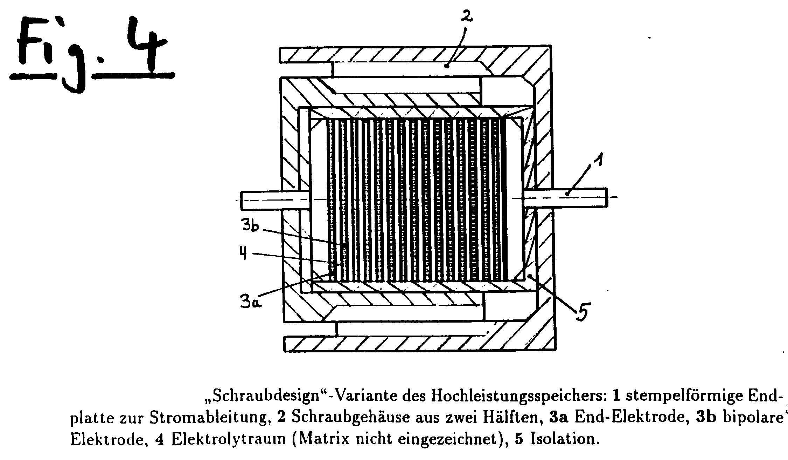

In **Fig. 4** ist eine Ausführung des Stapeldesigns, das sogenannte Schraubdesign, dargestellt. Zwischen zwei stempelförmigen Endplatten 1 befindet sich der Elektrodenstapel aus mindestens zwei Elektroden 3a,3b (3a End-elektrode, 3b bipolare Elektrode) und einem dazwischenliegenden Elektrolytraum 4 mit einer flüssigkeitsgetränkten Keramikmatrix. Der durch Aneinanderlegen der einzelnen Elektroden-Matrix-Einheiten entstehende Stapel wird durch feste, verschraubte Gehäuseteile 2 zusammengehalten. Eine Isolierschicht 5 verhindert den elektrischen Kontakt zwischen den Endplatten. Dieser wird durch feste, verschraubte Endplatten zusammengehalten. Beim Zusammenbau ist der richtige Anpreßdruck entscheidend. Es muß darauf geachtet werden, daß alle Zellkomponenten dicht aufeinander liegen und keine Luftblasen eingeschlossen werden. Durch die Pressung darf die poröse Oberfläche der Beschichtung nicht zerstört werden. Andererseits muß das Dichtungsmaterial ausreichend gepreßt und der Abstand der Elektrodenbleche gering gehalten werden.

**Beispiel 10** (Knopfzellen-Seriendesign). Statt durch metallische Endplatten wird der Elektroden-Matrix-Stapel nach Beispiel 7 in ein ähnliches Metallgehäuse, wie es in der Batterieindustrie als "Knopfzelle" Verwendung findet, eingebaut. Mehrere Knopfzellen, elektrisch leitend miteinander verbunden bilden eine dem Seriendesign entsprechende Anordnung.

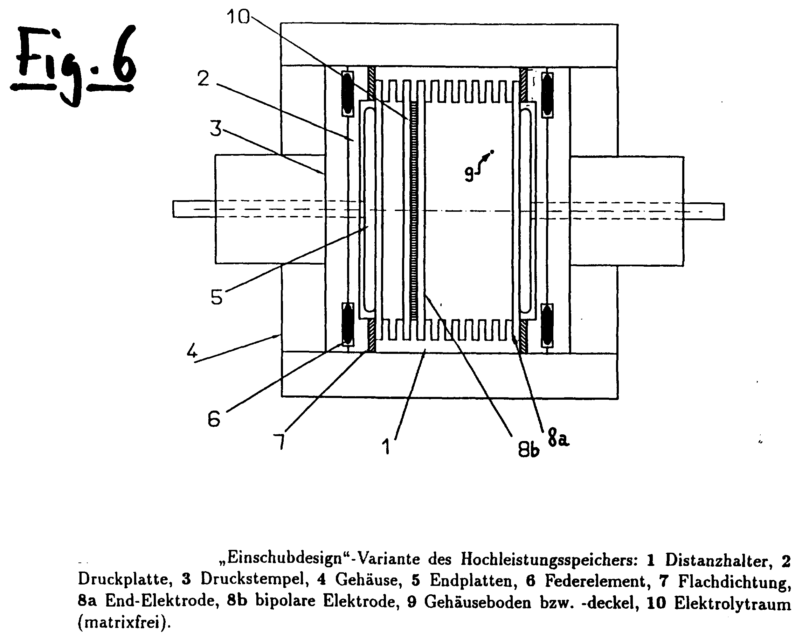

**Beispiel 11** (Einschubdesign, matrixfrei). Eine Ausführung ist in **Fig. 6** beschrieben. Statt durch eine Matrix werden die Elektroden 8a,8b durch eine vorgegebene Halterung 1 mit äquidistanten Rahmenführungen oder Abstandhaltern in einem umgebenden chemisch stabilen Kunststoffgehäuse 4 getrennt. Der Vorteil dieser matrixfreien Anordnung ist der äußerst kleine Widerstand des so hergestellten Doppelschichtkondensators und die Nachfüllbarkeit. Nach dem Zusammenfügen werden die Elektrolyträume 10 in einem Arbeitsgang mit Elektrolyt gefüllt und das Gehäuse mit einem Deckel oder Gußharz verschlossen. Mechanische Festigkeit und Dichtigkeit wird durch zwei in das Gehäuse 4 eingelassene Druckstempel 3, Druckplatten 2 und Federelemente 6 erreicht. Die Stromableitung erfolgt durch stempelförmige Metallendplatten 5. Zwischen Druckplatte 2 und Endelektrode 8a befindet sich eine Flachdichtung 7. Der Gehäuseboden 9 besteht aus einer ebenen Platte und ist mit der Distanzhalterung 1 und dem umgebenden Gehäuse 4 feuchtigkeitsdicht verbunden.

**Anwendungen**

Die Erfindung eignet sich besonders für Anwendungen unter hohen Strömen bei kleinen bis mittleren Spannungen, u. a. als Pufferspeicher und Spannungsstabilisator unter hoher Strombelastung.

Zusammen mit einer Primärenergiequelle, z. B. einer Batterie, bildet der Doppelschichtkondensator ein Energieversorgungssystem (**Fig. 7**). Es besteht aus einer Spannungsquelle U, dem Verbraucher R und dem parallel zur Spannungsquelle geschalteten Doppelschichtkondensator C. Die Spule L verzögert den Ladestrom, damit sich der Kondensator periodisch entladen kann. Der momentane Spitzenenergiebedarf eines Verbrauchers wird innerhalb von Mikrosekunden vom Doppelschichtkondensator gedeckt, während die Primärenergiequelle die Grundlast liefert. Der elektrochemische Kondensator leistet hierbei zweierlei: (a) die kurzzeitige Bereitstellung großer Leistungspulse, (b) die Sicherung der Primärenergieversorgung bei kurzzeitigen Ausfällen.

Dieses Prinzip gestattet künftig, Primärenergiequellen kleiner und leichter auszulegen. Denn den kurzfristigen Leistungsbedarf des Verbrauchers deckt der geladene Kondensator, während die Grundlast von einer Batterie oder einer anderen Primärenergiequelle gedeckt wird. Dies ist bedeutsam für Batterietechnik, Raumfahrt, Mikroelektronik, Kraftfahrzeugtechnik und andere technologische Einsatzfelder.

Weitere Anwendungen ergeben sich als: (a) Leistungspulsspeicher (kurzfristige Bereitstellung großer Leistungspulse für Antennen, Elektromotoren, elektrische Maschinen, Stromversorgungsnetze, Kommunikationssysteme, Pulslaser, Lastausgleich bei elektrischen Antrieben u.a.), (b) Spannungsstabilisator (für unterbrechungsfreie Stromversorgungen), (c) Energiepuffer (Überbrückung der Energieversorgung bei Netzausfällen, Datensicherung in Rechnersystemen, Betriebssicherung elektronischer Anlagen, Schutz der Regelelektronik, kurzzeitiger Lastausgleich bei der Stromerzeugung), (d) Stromquelle über kurze Zeiträume.

**Patentansprüche**

1. Langzeitstabile Elektrode von hoher Flächenkapazität und niedrigem Widerstand für einen Doppelschichtkondensator, bestehend aus

   - einem chemisch beständigen Träger
   - einer Aktivschicht aus unterstöchiometrischen, hydratisierten Metalloxiden
   - einer Grundschicht aus Edelmetallen auf dem Träger
   - einer elektrisch leitenden, oxidischen Zwischenschicht zwischen Träger und Aktivschicht

2. Elektrode nach Anspruch 1, wobei die Metalloxide durch Ausfällen mit Laugen aus chloridhaltigen Metallsalzlösungen der Elemente Ruthenium, Iridium, Tantal, Titan und Platin oder anderer Elemente der Gruppen IVB bis VIIIB des Periodensystems und nachfolgende thermische Umsetzung pulverförmig erhalten werden.

3. Elektrode nach Anspruch 1, wobei die Metalloxide aus chloridhaltigen Metallsalzen der Elemente Ruthenium, Iridium, Tantal, Titan und Platin oder anderer Elemente der Gruppen IVB bis VIIIB des Periodensystems unter Zugabe eines wasserlöslichen Salzes und durch thermische Zersetzung pulverförmig erhalten werden und das Salz anschließend wieder herausgelöst wird.

4. Elektrode nach einem der vorangehenden Ansprüche, wobei der Träger aus Netzen, Blechen oder Filzen von Nickel, Titan oder Ventilmetallen oder Graphit besteht.

5. Elektrode nach einem der vorangehenden Ansprüche, wobei die Grundschicht aus galvanisch abgeschiedenen Keimen von Palladium oder Platin oder anderen Edelmetallen der Gruppe VIIIB besteht.

6. Elektrode nach einem der vorangehenden Ansprüche, wobei die Zwischenschicht durch Aufsintern des Metalloxids auf den Träger bei 300-500°C entsteht und von den Metallkeimen der Grundschicht elektrisch kurzgeschlossen wird.

7. Elektrode nach einem der vorangehenden Ansprüche, wobei das Metalloxid in Verbindung mit einem Leitkleber auf den Träger aufgebracht wird.

8. Doppelschichtkondensatoreinheit, bestehend aus mindestens zwei Elektroden nach einem der vorangehenden Ansprüche.

9. Doppelschichtkondensatoreinheit nach Anspruch 8, **dadurch gekennzeichnet**, daß sich zwischen den Elektroden eine elektrolytgetränkte Keramikmatrix auf Basis von Zirkondioxid befindet.

10. Doppelschichtkondensator aus Einheiten nach Anspruch 8, **dadurch gekennzeichnet**, daß die Elektroden ohne Separator in einem Gehäuse fixiert sind.

11. Doppelschichtkondensator aus Einheiten nach Anspruch 8 und 9, **dadurch gekennzeichnet**, daß jeweils zwei Einheiten in separaten Gehäuseteilen durch eine gemeinsame bipolare Elektrode verbunden sind.

12. Doppelschichtkondensator aus Einheiten nach Anspruch 8 und 9, **dadurch gekennzeichnet**, daß die Einheiten durch zwei gegeneinander verschraubte Gehäusehälften zusammengehalten werden.

**Claims**

1. Long-time stable electrode with a high surface capacitance and low resistance for a double-layer capacitor, comprising

- a chemically stable carrier
- an active layer of sub-stoichiometric, hydrated metal oxides
- a base layer of precious metals on the carrier
- an electrically conductive, oxidic intermediate layer between the carrier and the active layer.

2. Electrode according to claim 1, in which the metal oxides are obtained in powder form by precipitation with leaching from chloride-containing metal salt solutions of the elements ruthenium, iridium, tantalum, titanium, and platinum or other elements of the groups IVB to VIIIB of the periodic table and subsequent thermal conversion.

3. Electrode according to claim 1, wherein the metal oxides are obtained in powder form from chloride-containing metal salts of the elements ruthenium, iridium, tantalum, titanium, and platinum or other elements of the groups IVB to VIIIB of the periodic table under addition of a water-soluble salt and by means of thermal decomposition, and the salt is subsequently dissolved out again.

4. Electrode according to any one of the preceding claims, wherein the carrier consists of lattices, sheets or felts of nickel, titanium or valve metals or graphite.

5. Electrode according to any one of the preceding claims, wherein the base layer consists of galvanically separated nuclei of palladium or platinum or other precious metals of the group VIIIB.

6. Electrode according to any one of the preceding claims, wherein the intermediate layer results from sintering the metal oxide onto the carrier at 300-500°C and the base layer is shortcircuited by the metal nuclei.

7. Electrode according to any one of the preceding claims, wherein the metal oxide is applied to the carrier in conjunction with a conductive adhesive.

8. Double-layer capacitor unit, comprising at least two electrodes according to any one of the preceding claims.

9. Double-layer capacitor unit according to claim 8, characterised in that an electrolyte-impregnated ceramic matrix based on zirconium dioxide is located between the electrodes.

10. Double-layer capacitor of units according to claim 8, characterised in that the electrodes are secured in a casing without a separator.

11. Double-layer capacitor of units according to claim 8 and claim 9, characterised in that, in each case, two units are connected in separate casing parts by a common bipolar electrode.

12. Double-layer capacitor of units according to claim 8 and claim 9, characterised in that the units are held together by two casing halves which are screwed together.

## Revendications

1. Electrode stable à long terme, de grande capacité surfacique et de faible résistance, pour un condensateur à double couche, comprenant

   - un support chimiquement stable
   - une couche active d'oxydes métalliques hydratés sous-stoechiométriques
   - une couche de base de métaux précieux sur le support
   - une couche intermédiaire d'oxyde, électriquement conductrice, entre le support et la couche active.

2. Electrode selon la revendication 1, caractérisée en ce que les oxydes métalliques sont obtenus sous forme de poudre par précipitation avec des lessives de solutions de sels métalliques chlorurées des éléments ruthénium, iridium, tantale, titane et platine ou d'autres éléments des groupes IVB à VIIIB de la classification périodique, suivie d'une transformation thermique.

3. Electrode selon la revendication 1, caractérisée en ce que les oxydes métalliques sont obtenus sous forme de poudre à partir de sels métalliques chlorurés des éléments ruthénium, iridium, tantale, titane et platine ou d'autres éléments des groupes IVB à VIIIB de la classification périodique, avec addition d'un sel soluble dans l'eau et décomposition thermique, le sel étant ensuite éliminé.

4. Electrode selon l'une des revendications précédentes, caractérisée en ce que le support est constitué de grilles, de tôles ou de feutres de nickel, titane ou de métaux de valves ou de graphite.

5. Electrode selon l'une des revendications précédentes, caractérisée en ce que la couche de base est constituée de germes de palladium ou de platine ou d'autres métaux précieux du groupe VIIIB déposés par électrolyse.

6. Electrode selon l'une des revendications précédentes, caractérisée en ce que la couche intermédiaire est réalisée par frittage de l'oxyde métallique sur le support à une température de 300 à 500°C et électriquement court-circuitée par les germes métalliques de la couche de base.

7. Electrode selon l'une des revendications précédentes, caractérisée en ce que l'oxyde métallique est déposé sur le support en combinaison avec une colle conductrice.

8. Unité de condensateur à double couche composée d'au moins deux électrodes selon l'une des revendications précédentes.

9. Unité de condensateur à double couche selon la revendication 8, caractérisée en ce qu'une matrice céramique à base de zircone imprégnée d'électrolyte est placée entre les électrodes.

10. Condensateur à double couche formé d'unités selon la revendication 8, caractérisé en ce que les électrodes sont fixées sans séparateur dans un boîtier.

11. Condensateur à double couche formé d'unités selon les revendications 8 et 9, caractérisé en ce que deux unités respectifs sont couplées, dans des éléments de boîtier séparés, par une électrode bipolaire commune.

12. Condensateur à double couche formé d'unités selon les revendications 8 et 9, caractérisé en ce que les unités sont maintenues ensemble par deux moitiés de boîtier vissées l'une à l'autre.

# Fig.1

Anode    Elektrolyt    Kathode

$C_A$ $C_K$ $R_{el}$ $R_A$ $R_K$

# Fig.7

$L$ $U$ $C$ $R$

# Fig. 2

Eigenschaften der Elektroden nach Beispiel 1–7. Widerstand und Kapazität durch Impedanzmessungen an Einzelzellen mit derselben Keramikmatrix (Beispiel 8) bestimmt. ($C$ Pseudokapazität bei 1 kHz und 1 Hz, $R$ ohmscher Widerstand, $A$ Elektrodenfläche, $\varrho$ spezifischer Widerstand, $m$ aktive Masse).

| | Widerstand | | | Kapazität | | | | Fläche |
|---|---|---|---|---|---|---|---|---|
| | $\dfrac{R \cdot A}{\Omega\,cm^2}$ | $\dfrac{\varrho_{1\,kHz}}{\Omega\,cm}$ | $\dfrac{\varrho_{1\,Hz}}{\Omega\,cm}$ | $\dfrac{C_{1\,kHz}/A}{mF/cm^2}$ | $\dfrac{C_{1\,Hz}/A}{mF/cm^2}$ | $\dfrac{C_{1\,kHz}/m}{F/g}$ | $\dfrac{C_{1\,Hz}/m}{F/g}$ | $\dfrac{m/A}{mg/cm^2}$ |
| Saure Technik (Beispiel 1–6) | 0.01–0.3 | 0.2–7 | 4–80 | 21–150 | 80–3000 | 0.2–18 | 1.6–100 | 3–20 |
| Alkalische Technik (Beispiel 1–4) | 0.1–0.3 | 1.9–2.5 | 10–50 | 2–30 | 25–1100 | 0.8–2 | bis 31 | 0.4–10 |
| (Beispiel 7) | 0.3–2.6 | 1–20 | 5–25 | 4–100 | 160–4000 | 0.2–3 | 10–150 | 1–9 |

# Fig.3

Endplatte

Kathodenblech

Bipolare Elektrode

Matrix

Dichtung

End-Elektrode

Anodenblech

Endplatte

Allgemeiner Aufbau des Hochleistungsspeichers (Stapeldesign).

**Fig. 4**

„Schraubdesign"-Variante des Hochleistungsspeichers: **1** stempelförmige End-platte zur Stromableitung, **2** Schraubgehäuse aus zwei Hälften, **3a** End-Elektrode, **3b** bipolare‘ Elektrode, **4** Elektrolytraum (Matrix nicht eingezeichnet), **5** Isolation.

EP 0 622 815 B1

# Fig.5

„Seriendesign"-Variante des Hochleistungsspeichers. Explosionszeichnung für einen 5-Zeller: **1** Endelektrode, **2** bipolare Elektrode beidseitig des Formteiles, **3** Kunstoff-Formteil, **4** Elektrolytraum (Matrix nicht eingezeichnet), **5a** rückseitiger Steg, **5b** frontseitiger Steg, **6** Klebenut.

EP 0 622 815 B1

„Einschubdesign"-Variante des Hochleistungsspeichers: **1** Distanzhalter, **2** Druckplatte, **3** Druckstempel, **4** Gehäuse, **5** Endplatten, **6** Federelement, **7** Flachdichtung, **8a** End-Elektrode, **8b** bipolare Elektrode, **9** Gehäuseboden bzw. -deckel, **10** Elektrolytraum (matrixfrei).

EP 0 622 815 B1